**Europäisches Patentamt**

**European Patent Office**

**Office européen des brevets**

(19)

(11) Veröffentlichungsnummer : **0 085 316**
**B1**

(12)

# EUROPÄISCHE PATENTSCHRIFT

(45) Veröffentlichungstag der Patentschrift :
30.12.86

(51) Int. Cl.⁴ : **C 10 B 57/10, C 10 B 39/02**

(21) Anmeldenummer : **83100263.9**

(22) Anmeldetag : **14.01.83**

(54) Verfahren zur Erwärmung kalter, feuchter Kohle.

(30) Priorität : **03.02.82 DE 3203568**

(43) Veröffentlichungstag der Anmeldung :
**10.08.83 Patentblatt 83/32**

(45) Bekanntmachung des Hinweises auf die Patenterteilung : **30.12.86 Patentblatt 86/52**

(84) Benannte Vertragsstaaten :
**AT BE DE FR GB IT LU NL SE**

(56) Entgegenhaltungen :
**DE-A- 2 434 827**
**GB-A- 407 665**

(73) Patentinhaber : **Krupp Koppers GmbH**
**Altendorfer Strasse 120**
**D-4300 Essen 1 (DE)**

(72) Erfinder : **Heinrichs, Bernhard, Dipl.-Ing.**
**Am Mühlenteich 5**
**D-4640 Wattenscheid (DE)**
Erfinder : **Jokisch, Friedrich, Dr. Dipl.-Ing.**
**Henricistrasse 71**
**D-4300 Essen 1 (DE)**

**Beschreibung**

Die Erfindung betrifft ein Verfahren zur Erwärmung kalter, feuchter Kohle, insbesondere von zur nachfolgenden Verkokung bestimmter Kohle, bei dem die erforderliche Wärme durch bis auf ca. 500 °C erhitzte Festkörper, vorzugsweise Kugeln, auf die Kohle übertragen wird, worauf die entsprechend abgekühlten Festkörper von der erwärmten Kohle abgetrennt und vor ihrer Wiederverwendung durch das heisse Kreislaufgas eines Kokstrockenkühlers wiederaufgeheizt werden.

In der älteren deutschen Patentanmeldung DE-A-31 33 491.1 wird ein Verfahren der genannten Art beschrieben. Hierbei ist vorgesehen, dass ein Teilstrom des aus dem Kokstrockenkühler austretenden heissen Kreislaufgases unmittelbar in den der Wiederaufheizung der Festkörper dienenden Erhitzer eingeleitet wird. Das heisse Kreislaufgas besitzt beim Austritt aus dem Kokstrockenkühler jedoch eine Temperatur von ca. 800 °C, während für die Wiederaufheizung der Festkörper bis auf die gewünschte Betriebstemperatur von ca. 500 °C nur eine Gastemperatur von 600°-650 °C benötigt wird. Beim Verfahren nach der vorstehend genannten Patentanmeldung ist deshalb eine Bypassleitung vorgesehen, durch die dem ca. 800 °C heissen Kreislaufgas vor dem Eintritt in den Erhitzer aus diesem austretendes Gas zugemischt werden kann, wodurch es möglich wird, die Temperatur des in den Erhitzer eintretenden Gasstromes in gewissem Umfange herabzusetzen. Durch diesen Mischungsvorgang wird jedoch ein Teil der im aus dem Kokstrockenkühler austretenden heissen Kreislaufgas enthaltenen Energie vernichtet.

Der Erfindung liegt deshalb die Aufgabe zugrunde, das Verfahren der eingangs erwähnten Art dahingehend zu verbessern, dass beim Wärmeverbund zwischen dem Kokstrockenkühler und dem Erhitzer für die Festkörper eine Energievernichtung vermieden wird und gleichzeitig die allgemeinen Temperaturbedingungen verbessert werden.

Das der Lösung dieser Aufgabe dienende Verfahren ist erfindungsgemäss dadurch gekennzeichnet, dass das aus dem Kokstrockenkühler austretende heisse Kreislaufgas in einen aus Überhitzer-, Verdampfer- und Vorwärmerteil bestehenden Abhitzekessel eingeleitet wird, wobei hinter dem Überhitzerteil ein Teilstrom des Kreislaufgases abgezweigt und mit einer Temperatur von 600-650 °C in den der Wiederaufheizung der Festkörper dienenden Erhitzer eingeleitet und nach Passieren desselben in den Abhitzekessel zurückgeführt wird.

Da das den Erhitzer verlassende Kreislaufgas dabei noch eine Temperatur von ca. 250 °C aufweist, ist es zweckmässig, diesen Gasstrom an einer Stelle wieder in den Abhitzekessel einzuleiten, an der das dort befindliche Kreislaufgas in etwa die gleiche Temperatur aufweist. Dies ist hinter dem Verdampferteil des Abhitzekessels der Fall, so dass die wiedervereinigten Gasströme danach gemeinsam in den Vorwärmerteil des Abhitzekessels gelangen können, in dem sie weiter bis auf ca. 150 °C abgekühlt werden. Mit dieser Temperatur wird das Kreislaufgas sodann wieder in den Kokstrockenkühler eingeleitet. Bei dieser Verfahrensweise wird neben einer optimalen Ansnutzung der Restwärme des aus dem Erhitzer austretenden Gasstromes gleichzeitig eine günstige Beeinflussung des Temperaturniveaus im Kokstrockenkühler erreicht. Es hat sich nämlich gezeigt, daß eine unerwünschte Anhebung des unteren Temperaturniveaus im Kokstrockenkühler eintritt, wenn das den Erhitzer verlassende Kreislaufgas mit einer Temperatur von ca. 250 °C in den Kokstrockenkühler wiedereingeleitet wird.

Zur exakten Regelung der Gastemperatur des in den Erhitzer eingeleiteten Teilstromes des Kreislaufgases kann ausserdem eine Bypassleitung vorgesehen werden, die die zum Erhitzer gehörende Gasaustrittsleitung mit der entsprechenden Gaseintrittsleitung verbindet. In dieser Bypassleitung ist dabei eine Regelklappe vorgesehen, die in Abhängigkeit von der in der Gaseintrittsleitung gemessenen Temperatur gesteuert wird.

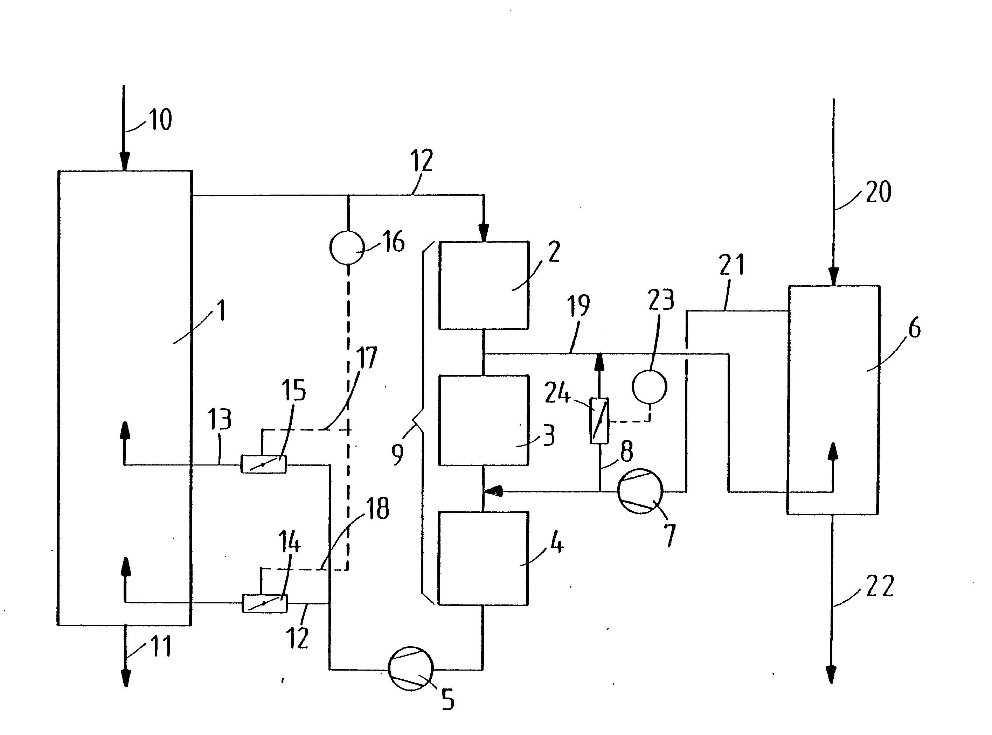

Weitere Einzelheiten des erfindungsgemässen Verfahrens sollen nachfolgend an Hand des Ausführungsbeispiels mit Hilfe des in der Abbildung dargestellten Fliessschemas erläutert werden. Das Fliessschema zeigt dabei nur die für die Erläuterung des erfindungsgemässen Verfahrens unbedingt notwendigen Anlageteile, während die Einrichtungen zur Erwärmung der Kohle sowie zur daran anschliessenden Abtrennung der Festkörper von der erwärmten Kohle nicht dargestellt sind. Bezüglich der hierzu bestehenden unterschiedlichen Ausgestaltungsmöglichkeiten wird auf die Ausführungen in der weiter oben genannten Patentanmeldung verwiesen.

In der Abbildung wird der Kokstrockenkühler mit 1 bezeichnet. Die Koksaufgabe 10 dient dabei der Zufuhr des von der nicht dargestellten Koksofenbatterie kommenden heissen Kokses in den Oberteil des Kokstrockenkühlers 1, während der gekühlte Koks im Unterteil desselben über den Koksaustrag 11 abgezogen wird. Zum Kokstrockenkühler 1 gehört der Abhitzekessel 9, der in diesem Falle aus dem Überhitzerteil 2, dem Verdampferteil 3 und dem Vorwärmerteil 4 besteht. Die Klammer in der Abbildung soll dabei andeuten, dass diese drei Teile des Abhitzekessels 9 normalerweise zu einer baulichen Einheit zusammengefasst sind. Das zur Kokstrockenkühlung verwendete Kreislaufgas tritt über die Leitung 12 mit einer Temperatur von ca. 800 °C aus dem Oberteil des Kokstrockenkühlers 1 aus und passiert im Verlauf dieser Leitung nacheinander die drei Teile des Abhitzekessels 9. Anschliessend wird das bis auf ca. 150 °C abgekühlte Kreislaufgas im Gebläse 5 auf den erforderlichen Aufgabedruck verdichtet und wieder in den Kokstrockenkühler eingeleitet. Von der Leitung 12 zweigt dabei die Leitung 13 ab, durch die ein Teilstrom des verdichteten Kreislaufgases in den mittleren Teil des Kokstrockenkühlers 1 eingeleitet werden kann. In den Leitungen 12 und 13 sind dabei die motorgetriebenen Regelklappen 14 und 15 installiert, die in Abhängigkeit von der Temperatur des aus dem Kokstrockenkühler 1 austretenden heissen Kreislaufgases gesteuert werden. Hierfür ist in der Nähe des Kreislaufgasaustrittes in der Leitung 12 das Temperaturmessgerät 16 installiert, das die Regelklappen 14 und 15 über die unterbrochen gezeichneten Impulsleitungen 17 und 18 in der Weise steuert, dass beim Überschreiten eines vorgegebenen Temperatursollwertes durch stärkeres Öffnen der Regelklappen 14 und 15 die Zufuhr von Kreislaufgas zum Kokstrockenkühler 1 vergrössert wird, während umgekehrt beim Unterschreiten des Temperatursollwertes durch stärkeres Schliessen der Regelklappen 14 und 15 die Zufuhr von Kreislaufgas gedrosselt wird.

Hinter dem Überhitzerteil 2 des Abhitzekessels 9 zweigt die Leitung 19 ab, durch die ein Teilstrom des Kreislaufgases mit einer Temperatur von ca. 650 °C in den der Wiederaufheizung der Festkörper dienenden Erhitzer 6 eingeleitet wird. Die vorzugsweise kugelförmigen Festkörper werden hierbei, nachdem sie in einer in der Abbildung nicht dargestellten Einrichtung von der auf ca. 200 °C erwärmten Kohle abgetrennt worden sind, mit einer Temperatur von ca. 220 °C über die Leitung 20 auf den Erhitzer 6 aufgegeben. Im Erhitzer 6 werden die Festkörper dabei durch das ca. 650 °C heisse Kreislaufgas bis auf eine Temperatur von ca. 500 °C wieder erhitzt. Das Kreislaufgas aus der Leitung 19 wird zu diesem Zwecke von unten in den Erhitzer 6 eingeleitet und kühlt sich im Gegenstrom zu den Festkörpern bis auf ca. 250 °C ab. Mit dieser Temperatur wird das Kreislaufgas aus dem Oberteil des Erhitzers 6 abgezogen und gelangt über die Leitung 21 sowie das Gebläse 7 zurück zum Abhitzekessel 9. Die Wiedervereinigung mit dem übrigen Teilstrom des Kreislaufgases aus der Leitung 12 erfolgt dabei zwischen dem Verdampferteil 3 und dem Vorwärmerteil 4 des Abhitzekessels 9. Beide Gasströme weisen an dieser Stelle in etwa die gleiche Temperatur von ca. 250 °C auf. Anschliessend wird der wiedervereinigte Gasstrom im Vorwärmerteil 4 des Abhitzekessels 9 noch bis auf eine Temperatur von ca. 150 °C abgekühlt und gelangt sodann über das Gebläse 5 zurück zu den Aufgabestellen des Kokstrockenkühlers 1.

Die auf ca. 500 °C wiedererhitzten Festkörper werden über die Leitung 22 aus dem Erhitzer 6 abgezogen und gelangen in die in der Abbildung nicht dargestellte Einrichtung zur Erwärmung der Kohle, in der die Festkörper einen Teil der aufgenommenen Wärme an die zu erwärmende Kohle abgeben.

Für die Feineinstellung der Gastemperatur in der Leitung 19 ist die Bypassleitung 8 vorgesehen, die die Leitung 21 mit der Leitung 19 verbindet. Dadurch kann kälteres Gas aus der Leitung 21 dem heissen Gas in der Leitung 19 beigemischt werden. Die Steuerung erfolgt dabei über das Temperaturmessgerät 23, welches die Gastemperatur in der Leitung 19 ermittelt. Überschreitet die ermittelte Temperatur den vorgegebenen Sollwert, so wird die in der Bypassleitung 8 installierte motorgetriebene Regelklappe 24 automatisch geöffnet, während im umgekehrten Falle die Regelklappe 24 automatisch geschlossen wird. Die ermittelten Messwerte werden dabei über die unterbrochen eingezeichnete Impulsleitung 25 vom Temperaturmessgerät 23 auf die Regelklappe 24 übertragen.

**Patentansprüche**

1. Verfahren zur Erwärmung kalter, feuchter Kohle, insbesondere von zur nachfolgenden Verkokung bestimmter Kohle, bei dem die erforderliche Wärme durch bis auf ca. 500 °C erhitzte Festkörper, vorzugsweise Kugeln, auf die Kohle übertragen wird, worauf die entsprechend abgekühlten Festkörper von der erwärmten Kohle abgetrennt und vor ihrer Wiederverwendung durch das heisse Kreislaufgas eines Kokstrockenkühlers wiederaufgeheizt werden, dadurch gekennzeichnet, dass das aus dem Kokstrockenkühler (1) austretende heisse Kreislaufgas in einen aus Überhitzer- (2), Verdampfer- (3) und Vorwärmerteil (4) bestehenden Abhitzekessel (9) eingeleitet wird, wobei hinter dem Überhitzerteil (2) ein Teilstrom des Kreislaufgases abgezweigt und mit einer Temperatur von 600-650 °C in den der Wiederaufheizung der Festkörper dienenden Erhitzer (6) eingeleitet und nach Passieren desselben in den Abhitzekessel (9) zurückgeführt wird.

2. Verfahren nach Anspruch 1, dadurch gekennzeichnet, dass der aus dem Erhitzer (6) austretende Teilstrom des Kreislaufgases dem Abhitzekessel (9) hinter dem Verdampferteil (3) an einer Stelle wieder zugeführt wird, wo das den Abhitzekessel durchströmende Kreislaufgas eine Temperatur von ca. 250 °C aufweist.

3. Verfahren nach den Ansprüchen 1 und 2, dadurch gekennzeichnet, dass zur genauen Einstellung der Temperatur des in den Erhitzer (6) einzuleitenden Kreislaufgases über eine Bypassleitung (8) diesem Gasstrom ein Teilstrom des aus dem Erhitzer (6) austretenden kälteren Kreislaufgases zugemischt wird.

**Claims**

1. Process of preheating cold moist coal, particularly coal to be subsequently coked, in which the necessary heat is transferred to the coal by solid particles, preferably balls, heated to a temperature of about 500 °C, whereupon the correspondingly cooled solid particles are separated from the heated coal and are reheated before reuse by the hot circulation gas of a coke dry cooler, characterised in that, the hot circulation gas exhausting from the coke dry cooler (1) is introduced in a waste heat boiler (9) assembled of a superheating stage (2), a vaporizing stage (3) and a preaheating stage (4) branching after the superheating stage (2) a partial stream of the hot circulation gas at a temperature of about 600-650 °C and feeding that partial stream through the heater (6) used for the reheating of the solid particles, then discharging the partial stream from the heater (6) and reuniting the discharged partial stream with the main stream of the gas in the waste heat boiler (9).

2. Process according to claim 1, characterised in that, the partial stream of the circulation gas discharged from the heater (6) is reunited with the main stream of the gas in the waste heat boiler (9) at a point behind the vaporizing stage (3) where both streams have a temperature of about 250 °C.

3. Process according to claims 1 and 2, characterised in that, a portion of the colder partial stream of the gas discharged from the heater (6) is returned by a bypass conduit (8) into the hot partial stream of the gas before its introduction in the heater (6) so as to exactly adjust the temperature of that stream.

**Revendications**

1. Procédé pour chauffer du charbon froid humide, en particulier du charbon destiné à une cokéfaction ultérieure, dans lequel la chaleur nécessaire est transmise par des corps chauds portés à 500 °C environ, de préférence des billes, après quoi les corps solides refroidis en conséquence sont séparés du charbon chauffé et à nouveau chauffés, avant leur réutilisation, par le gaz de recyclage chaud d'un refroidisseur à sec du coke, caractérisé par le fait que le gaz de recyclage chaud sortant du refroidisseur à sec de coke (1) est envoyé dans une chaudière (9) à chaleurs perdues constituée par un surchauffeur (2), un évaporateur (3) et un élément (4) de préchauffage, tandis que derrière l'élément de surchauffeur (2) est dérivé un courant partiel du gaz de recyclage qui est envoyé à une température de 600 à 650 °C dans le réchauffeur (6) servant à réchauffer les corps solides et qu'après avoir traversé ledit réchauffeur (6) il est renvoyé dans la chaudière (9) à chaleurs perdues.

2. Procédé selon la revendication 1, caractérisé par le fait que le courant partiel de gaz de recyclage sortant du réchauffeur (6) est à nouveau renvoyé, derrière l'élément (3) d'évaporateur, en un endroit où le gaz de recyclage traversant la chaudière à chaleurs perdues présente une température de 250 °C environ.

3. Procédé selon les revendications 1 et 2, caractérisé par le fait que pour ajuster exactement la température du gaz de recyclage à introduire dans le réchauffeur (6), on mélange à ce courant de gaz, par l'intermédiaire d'une conduite à by pass (8), un courant partiel de gaz de recyclage plus froid sortant du réchauffeur (6).